# DEMANDE DE BREVET EUROPEEN

(11) **EP 0 837 116 A1**
(43) Date de publication de la demande: **22.04.1998**
(21) Numéro de dépôt: 97402461.4
(22) Date de dépôt: 17.10.1997
(51) Int. Cl.: C09K 5/04, C09K 5/00, C04B 35/536, B01J 21/18, B01J 20/20

(54) **Composite actif à structure feuilletée comprenant un agent actif sous forme de granules**

(30) Priorité: 21.10.1996 FR 9612762
(71) Demandeur: ELF AQUITAINE, 92400 Courbevoie (FR)
(72) Inventeur: Bou, Pierre, 95230 Soisy Sur Montmorency (FR); Guilleminot, Jean-Jacques, 91140 Bures Sur Yvette (FR); Pons, Michel, 75014 Paris (FR)
(74) Mandataire: Timoney, Ian Charles Craig

(57) **Abrégé**

Composite actif constitué d'un support comprimé et d'au moins un agent actif vis-à-vis d'un gaz, le support comprimé comprenant du graphite expansé recomprimé ayant une densité comprise entre 0,02 et 1,5, est formé d'une série de feuilles superposées les unes sur les autres. Selon l'invention l'agent actif est dispersé entre les feuilles sous forme de granules.

## Description

La présente invention se rapporte à un composite actif à structure feuilletée constitué d'un support comprimé en forme de feuilles et d'un agent actif vis-à-vis d'un gaz, l'agent actif étant dispersé entre les feuilles sous forme de granules.

La présente invention se rapporte également à un procédé de mise en oeuvre de processus physico-chimiques, gaz-solide ou gaz-liquide utilisant comme milieu réactionnel un tel composite actif.

Dans certains domaines comme par exemple celui des pompes à chaleur chimiques basées sur la thermicité de la réaction entre un solide et un gaz, ou de l'adsorption sur un solide d'un gaz, on utilise un mélange d'un matériau divisé, tel que le graphite expansé, et d'un réactif solide, par exemple un sel, ou un adsorbant comme une zéolite. Le mélange de graphite expansé et de ce solide, siège d'une réaction chimique ou d'une adsorption physique, présente de nombreux avantages lors d'une réaction chimique ou d'une adsorption physique entre le solide et un gaz. Le graphite expansé se présentant sous forme de feuillets ou de particules feuilletées a une très grande surface spécifique et permet la diffusion du gaz même en milieu confiné.

L'amélioration substantielle des cinétiques de réaction solide-gaz renversables observée, comme résultant du mélange du solide actif avec du graphite naturel expansé par voie thermique, dans des proportions massiques données et compactées dans un volume fixé résulte d'une excellente perméabilité du lit fixe ainsi préparé au gaz réactif et d'une conductivité thermique accompagnée d'un bon coefficient d'échange thermique aux parois. De manière classique, la préparation d'un tel réactif conduit à un lit essentiellement anisotrope homogène dont la conductivité anisotrope se situe à des valeurs de 0,5 à 2 Wm⁻¹K⁻¹ suivant les conditions de préparation (proportion et compactage), et dont le coefficient d'échange aux parois se situe entre 50 à 150 Wm⁻² K⁻¹.

Malgré ces avantages, l'utilisation de tels mélanges à l'état granulaire présente des inconvénients du fait de la difficulté à obtenir des mélanges réellement homogènes, de leur manutention difficile et du volume important qu'ils occupent. De plus, le réactif, souvent hygroscopique, a tendance à absorber l'humidité si l'opération de mélange est longue ; une déshydratation ultérieure est longue, voire coûteuse et peut influer sur la qualité du produit final même après déshydratation.

Le document WO91/15292 décrit un composite actif en forme de bloc qui comprend du graphite expansé recomprimé, imprégné par la suite avec un agent actif, par exemple, un sel. Ce type de composite actif présente des avantages importants par rapport aux mélanges pulvérulents contenant du graphite expansé décrits ci-dessus, mais, néanmoins il peut être difficile à réaliser car, lorsque le bloc est imprégné par un liquide, le temps de séchage du bloc peut s'avérer long. Les procédés de fabrication du graphite expansé sont bien connus, en particulier par le brevet US 3 404 061. Ces procédés, dits d'exfoliation du graphite, comprennent une phase d'expansion rapide par chauffage d'un complexe graphitique qui produit une poudre de graphite expansé en vermicules.

Le document FR-A-2 732 242 décrit une composite actif formé d'une série de feuilles de graphite comprimé, superposées les unes sur les autres, un agent actif étant dispersé dans les feuilles. Typiquement, lors de la fabrication de ce type de composite, les feuilles sont trempées dans une solution de l'agent actif, puis séchées par la suite.

Du document FR-A-2 715 081 on connaît un réactif pour systèmes thermochimiques sous forme de granules. Chaque granule comprend un support formé de graphite naturel expansé recomprimé qui est imprégné d'agent actif. L'imprégnation avec l'agent actif s'effectue en immergeant les granules dans une solution de l'agent, puis en les séchant par la suite.

Comme le procédé de fabrication des deux types de réactif précédents comporte une étape d'imprégnation suivie d'une étape de séchage, il peut s'avérer long et coûteux.

La présente invention a donc pour objet un composite actif à structure feuilletée qui offre une excellente perméabilité à un flux gazeux et présente de bonnes propriétés de conductivité thermique, tout en étant facile à réaliser.

Pour ce faire, l'invention propose un composite actif constitué d'un support comprimé et d'au moins un agent actif vis-à-vis d'un gaz, le support comprimé, comprenant du graphite expansé recomprimé ayant une densité comprise entre 0,02 et 1,5, étant formé d'une série de feuilles superposées les unes sur les autres, caractérisé en ce que l'agent actif est dispersé entre les feuilles sous forme de granules.

Selon un mode de réalisation préféré, le composite actif à structure feuilletée comprend de 5 à 95 % en poids de graphite expansé recomprimé et de 95 à 5 % en poids d'agent actif.

L'invention propose également un procédé de mise en oeuvre de processus physico-chimiques solide-gaz ou solide-liquide caractérisé en ce qu'il utilise comme milieu réactionnel un composite actif constitué d'un support comprimé et d'un agent actif vis-à-vis d'un gaz, le support comprimé comprenant du graphite expansé recomprimé ayant une densité comprise entre 0,02 et 1,5, étant formé d'une série de feuilles superposées les unes sur les autres, l'agent actif étant dispersé entre les feuilles sous forme de granules.

Un tel composite actif est destiné à être utilisé pour mettre en oeuvre soit une réaction de type solide-gaz, soit une adsorption entre un gaz et un solide, soit une réaction entre un gaz et un liquide catalysée par un solide, soit le siège d'une condensation/évaporation d'un gaz, soit enfin la réaction de transformation d'un gaz catalysée par un solide. Ainsi, la présente invention propose un procédé de mise en oeuvre soit de réactions du type gaz-solide, soit d'adsorption gaz-solide, soit enfin de transformation catalytique d'un gaz en utilisant comme milieu réactionnel un bloc de composite actif selon l'invention.

Le composite actif selon l'invention doit présenter une très forte anisotropie en transferts thermique qui résultera de la compression ordonnée des feuillets de graphite très bons conducteurs de la chaleur, tout en conservant une grande porosité permettant une bonne diffusion du gaz jusqu'à chaque site actif que l'on dispose sensiblement uniformément dans le composite.

Le composite actif selon l'invention dont la densité du graphite est comprise entre 0,02 et 1,5 présente une anisotropie de conductivité thermique importante, c'est-à-dire que la conductivité thermique C₁ selon une première direction D₁ du composite actif est nettement plus importante que celle obtenue selon une autre direction D₂ du composite perpendiculaire à la première. Le composite actif selon l'invention présente un coefficient d'anisotropie, qui est le rapport C₁/C₂, compris entre 2 et 200 et de préférence entre 10 et 100.

Par ailleurs, le composite actif selon l'invention doit présenter une porosité importante permettant aux gaz d'atteindre les sites actifs.

Selon un aspect de l'invention, le composite actif comprend un empilement de feuilles analogues, associées par paires de manière à ce que dans chaque paire les deux faces munies de granules sont en contact. Ainsi est créé un passage entre deux feuilles d'une paire qui rend les granules facilement accessibles par un gaz.

Selon des variantes de l'invention, de manière à augmenter davantage l'accessibilité des liquides et gaz aux sites actifs :
- au moins une couche de matériau très poreux est disposée entre deux couches avoisinantes d'agent actif
- et/ou le support comprimé est parcouru par des trous de diffusion de différentes sections qui traversent le plan des feuilles ;
- et/ou la face des feuilles du support comprimé est parcourue d'un réseau de canaux de diffusion qui est peut-être notamment gravé ou moulé

Ledit matériau très poreux est avantageusement un tissu, mat ou papier de matériau carboné, de verre ou tout autre matériau résistant au gaz ou au liquide et aux températures atteintes lors de la mise en oeuvre desdits processus physico-chimiques.

Selon une autre variante de l'invention, de manière à varier notamment la conductivité thermique dans le plan des feuilles et donc à ajuster l'écoulement thermique, lesdits feuilles possèdent des fentes et/ou des entailles et/ou des rainures, traversantes ou non et de différentes longueurs et différentes formes, telles que des arcs de cercle.

D'autres caractéristiques et avantages de la présente invention apparaîtront plus clairement à la lecture de la description suivante, faite en référence aux dessins annexés sur lesquels :

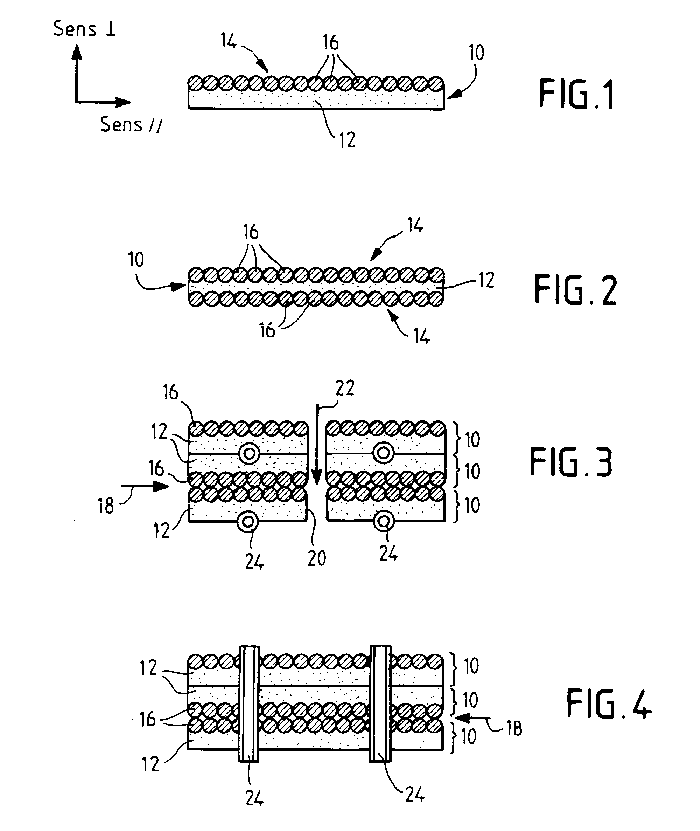

- Les figures 1 à 4 sont chacune une vue schématique en coupe longitudinale d'un composite actif à structure feuilletée selon l'invention.

Le composite actif selon l'invention est destiné à être formé en superposant plusieurs feuilles analogues dont une est représentée sur la figure 1.

La feuille 10 comprend un support 12 réalisé à partir de graphite expansé sous forme pulvérulente qui est comprimé, par exemple par une presse dans un moule ou par un prélaminoir. La compression peut s'effectuer en plusieurs étapes, la densité de graphite de la feuille produite augmentant à chaque étape. De préférence la densité de graphite finale de la feuille est comprise entre 0,02 et 1,5 g/cm³.

Une fois que l'on a réalisé le support 12, de l'agent actif 14, sous forme de granules 16, est disposé sur au moins une face du support 12. Puis, les granules 16 sont rendus solidaires avec le support 12 soit par compression simple, soit par collage, une couche de colle ayant été disposée sur le support au préalable, puis compression. On peut également disposer les granules 16 d'agent actif des deux côtés du support 12, tel que représenté sur la figure 2.

Ayant formé plusieurs feuilles 10 analogues, soit en les préparant séparément, soit en produisant une feuille continue qui est découpée par la suite en morceaux similaires, les feuilles 10 peuvent être superposées afin de former un composite actif.

Sur la figure 3 est représenté un composite actif formé de plusieurs feuilles 10, chacune munie d'agent actif sur un seul de ses côtés. Les feuilles 10 sont superposées de manière à ce que les faces munies d'agent actif, de deux feuilles avoisinantes, se trouvent ensemble. Ainsi, lors d'une mise en oeuvre d'une réaction entre l'agent actif et un gaz, le gaz peut circuler, dans le sens de la flèche 18, entre les granules 16 de l'agent actif. Des conduits 20 perpendiculaires aux feuilles, destinés à permettre le passage du gaz dans le sens de la flèche 22, peuvent avantageusement être formés dans le composite actif.

Comme les feuilles du composite actif sont disposées par paire de manière à ce que deux faces munies de granules, de deux feuilles consécutives, se trouvent en contact, la porosité du composite est celle des granules. Ceci se traduit par la création de voies de passage préférentielles pour le gaz à travers le composite.

Le composite actif est muni de tubes caloporteurs 24, en contact intime avec les supports 12, qui sont destinés à recevoir un fluide caloporteur apte à assurer l'échange thermique avec le composite par l'intermédiaire du graphite du support comprimé. De plus, des résistances électriques peuvent avantageusement être disposées dans le composite. De manière alternative, les tubes caloporteurs 24 peuvent traverser plusieurs feuilles 10, tel que représenté sur la figure 4.

De manière alternative, au lieu de prévoir des tubes caloporteurs disposés transversalement, des échangeurs de chaleur, en forme de plaques, peuvent être disposés parallèlement aux feuilles à l'intérieur du composite actif De préférence, chaque échangeur est situé entre deux faces de feuilles consécutives qui sont dépourvues de granules.

Le bon contact entre le composite actif et les dispositifs d'échange thermique peut être assuré :
- par moulage compression des dispositifs d'échange lors de l'élaboration du composite actif ;
- lors de la constitution de l'empilement des feuilles : en disposant les échangeurs, au contact des supports puis en comprimant l'empilement constitué à la fois par les feuilles et les échangeurs.
- s'il s'agit d'échangeurs tubulaires : après constitution de l'empilement, par emmanchement en force des tubes dans l'empilement ou par tout moyen connu permet-tant de faire augmenter le diamètre d'un tube après mise en place (olivage, déformation sous pression...).

Ce bon contact thermique peut être amélioré par tout moyen visant à l'emploi d'un tiers corps comme des pâtes ou des colles conductrices.

Le matériau se présentant sous forme de feuilles très facilement usinables par un jet d'eau ou tout autre moyen, il est possible d'utiliser cet avantage pour réaliser des composites actifs et des réseaux de dispositifs échangeurs thermiques ou gazeux de formes complexes.

La disposition des granules 16 sur la surface d'un support 10 peut facilement être contrôlée. Il est notamment possible de masquer certaines zones du support par tout moyen connu (masque papier, autocollant...) de manière à empêcher les granules de rentrer en contact avec le support lors de la phase de compression du lit de granules sur le support. De telle façon il suffit de retirer le masque pour voir dessiné à la surface du support 10 un réseau sans granules 16 correspondant à la géométrie du masque.

La structure en feuilles superposables du composite actif permet d'envisager une composition ou des caractéristiques variables de l'empilement en fonction de la hauteur. Il sera notamment envisageable de réaliser un empilement de plaques :
- avec des granules de zéolithe, par exemple, alternée avec des feuilles à base de charbon actif,
- avec des taux de granules par plaques variables d'une feuille à l'autre,
- avec des conductivités thermiques variables d'une feuille à l'autre,
- avec des perméabilités variables d'une feuille à l'autre,
- avec un flux thermique variable d'une feuille à l'autre, par exemple en faisant varier le nombre de tubes caloporteurs.

### EXEMPLE

Afin de vérifier les performances techniques du composite actif selon l'invention, trois matériaux sont réalisés, puis testés dans une même chambre de réacteur. L'agent actif dans chacun des trois composites était du zéolithe, siège d'une réaction d'adsorption avec de la vapeur d'eau.

Le matériau M1 est un lit de granules de zéolithe de Ø=2mm versées dans le réacteur.

Le matériau M2, réalisé selon le brevet WO91/15292, est un mélange de poudre de zéolithe (5µm<Ø<100µm) et de graphite expansé dans les proportions massiques suivantes 70 zéolithe/30 graphite.

Le mélange homogène a ensuite été comprimé pour obtenir un cylindre de Ø=150mm et de hauteur 100mm dont la densité de graphite dG=0,2 g/cm³.

Le matériau M3 selon l'invention est un empilement de feuilles chacune réalisée par la succession d'opérations suivante :
- création d'une monocouche de granules de zéolithe de Ø=2mm.
- fabrication par compression de graphite expansé d'un support de densité initiale dGinit=0,05g/cm³
- encollage du support par pulvérisation de colle
- compression du support sur le lit de granules de zéolithe jusqu'à ce que l'épaisseur de la feuille soit telle que dG=0,2g/cm³ (idem M2)
   On obtient alors une feuille monocouche avec un taux de zéolithe de 70% et dG=0,2g/cm³
- On découpe enfin au jet d'eau des disques de Ø=150mm et on les empile dans le réacteur pour obtenir une hauteur de 100mm.

Après mesure des caractéristiques des 3 matériaux dans le sens axial ou perpendiculaire au plan des plaques de composite actif (indice ⊥) et dans le sens radial ou parallèle au plan des plaques de composite (indice //) on obtient les résultats suivants :

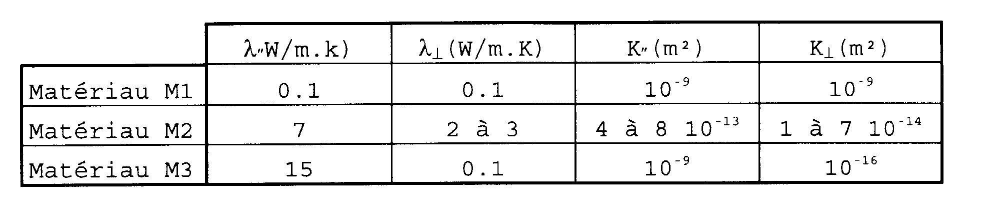

Le matériau M1 possède une puissance d'adsorption limitée par sa faible conductivité thermique, l'échauf-fement bloque la réaction d'adsorption.

Les performances en puissance du matériau M2 sont améliorées grâce au gain de conductivité thermique d'un facteur 70 mais sa faible perméabilité limite ce gain de puissance.

Le matériau M3 selon l'invention permet un accroissement de conductivité d'un facteur 150 par rapport à M1 tout en gardant la même perméabilité non limitante. Une conséquence directe est un gain en puissance d'un facteur au moins égal à 20. En outre, l'anisotropie de conductivité thermique quantifiée par le rapport λ^{//}/λ^{^{┴}} (1 pour M1, 2,3 à 3,5 pour M2, 150 pour M3) peut être mise à profit pour concevoir des réacteurs plus efficaces tels que décrits dans les systèmes à front de chaleur. Le composite actif à structure feuilletée selon l'invention peut être réalisé à partir de nombreux agents actifs différents tels que ceux proposés par exemple dans le tableau I. Par agent actif, on entend par exemple un solide réactif, un solide absorbant, ou un solide agissant comme catalyseur.

**TABLEAU I**

| Nature de l'interaction agent actif-gaz | Agents actifs | Gaz |
|---|---|---|
| Réactions solide-gaz (renversables) | Halogénures Pseudohalogénures Carbonates Sulfates Nitrates | Eau NH₃ et dérivés (amines) |
| | Oxydes | CO₂ SO₂ SO₃ |
| | Métaux alliages métalliques | O₂ H₂ Hydrocarbures |
| | Hydrures métalliques | H₂ |
| Adsorption solide-gaz (renversable) | Zéolithe Charbon actif Silicagel Oxyde phosphorique | Eau Méthanol et dérivés Ammoniac |
| Catalyse hétérogène | Ni + C₆ H₆ | H₂ |
| Séparation des gaz | Zéolithe Charbon actif Silicagel Oxyde phosphorique | Exemples Air, Hydrocarbures, Composites organiques volatiles |

Comme un bloc de composite actif est formé à partir de feuilles superposées les unes sur les autres, on peut préparer différents types de blocs en fonction de l'application qui leur est destinée. Dans le cas le plus simple, un bloc de composite actif est réalisé à partir de feuilles ayant la même densité, chaque feuille comportant le même agent actif dans les mêmes proportions. Le bloc ainsi réalisé a une structure homogène.

On peut également utiliser des feuilles ayant des densités différentes pour réaliser le bloc de composite actif, par exemple afin de créer un bloc dont la densité croît ou décroît progressivement à travers son épaisseur. Ce type de bloc peut être réalisé à partir de feuilles de densités différentes comportant chacune le même agent actif, soit dans les mêmes proportions, soit dans des proportions qui varient en fonction de la densité des feuilles.

En plus, en disposant sur les feuilles de différents agents actifs, de préférence un agent actif par feuille, il est possible de constituer des composites actifs comportant différents agents actifs dans certaines zones, et en proportions prédéterminées. Ce type de composite peut avantageusement être réalisé à partir de feuilles de densités différentes.

Ainsi, selon l'invention, on peut réaliser divers types de composite actif dont la densité des feuilles, la nature de l'agent actif et ses proportions dans le bloc peuvent être aisément sélectionnées.

Le composite actif selon l'invention présente ainsi de meilleurs performances étant donné qu'il dispose d'une plus grande tenue mécanique (faible variation du volume occupé par le réactif) et permet ainsi, d'obtenir des coefficients d'échange thermique à la paroi non limitant pour le procédé.

## Revendications

1. Composite actif constitué d'un support comprimé et d'au moins un agent actif vis-à-vis d'un gaz, le support comprimé, comprenant du graphite expansé recomprimé, ayant une densité comprise entre 0,02 et 1,5, étant formé d'une série de feuilles superposées les unes sur les autres, caractérisé en ce que l'agent actif est dispersé entre les feuilles sous forme de granules.

2. Composite actif selon la revendication 1 caractérisé en ce que les granules sont rendues solidaires d'une feuille avoisinante.

3. Composite actif selon la revendication 2 caractérisé en ce que les granules sont rendus solidaires de la feuille par collage.

4. Composite actif selon la revendication 1 ou 2 caractérisé en ce qu'il comprend un empilement de feuilles analogues, associées par paires de manière à ce que dans chaque paire les deux faces munies de granules sont en contact.

5. Composite actif selon l'une des revendications 1 à 3 caractérisé en ce qu'il comprend des feuilles d'une épaisseur comprise entre 0,1 mm et 10 mm.

6. Composite actif selon l'une des revendication 1 à 5 caractérisé en ce qu'il comprend de 5 à 95 % en poids de graphite expansé recomprimé et de 95 à 5 % en poids d'agent actif.

7. Composite actif selon l'une des revendications 1 à 6 caractérisé en ce qu'il présente une anisotropie de conductivité thermique dont le coefficient C₁/C₂ est compris entre 2 et 200.

8. Composite actif selon l'une des revendications 1 à 7 caractérisé en ce que sa porosité ouverte est comprise entre 32 et 99 % de la porosité totale du composite.

9. Composite actif selon l'une des revendications 1 à 8 caractérisé en ce qu'il est formé de feuilles ayant la même densité.

10. Composite actif selon l'une des revendications 1 à 8 caractérisé en ce qu'il est formé de feuilles ayant des densités différentes;

11. Composite actif selon l'une des revendications 1 à 10 caractérisé en ce qu'il comporte différents agents actifs, chacun dispersé sur une feuille respective.

12. Composite actif selon l'une des revendications 1 à 11 caractérisé en ce que l'agent actif est dispersé dans les feuilles en proportions différentes.

13. Composite actif selon l'une des revendications 1 à 12, caractérisé en ce qu'au moins une couche de matériau très poreux est disposée entre les feuilles.

14. Composite actif selon la revendication 13, caractérisé en ce que ledit matériau très poreux est choisi parmi un tissu, mat ou papier de matériau carboné, de verre ou tout autre matériau résistant au gaz ou au liquide et aux températures atteintes lors de la mise en oeuvre desdits processus physico-chimiques.

15. Composite actif selon l'une des revendications 1 à 14, caractérisé en ce que ledit composite est parcouru par des trous de diffusion de différentes sections qui traversent le plan des feuilles.

16. Composite actif selon l'une des revendications 1 à 15, caractérisé en ce que les feuilles sont parcourues par un réseau de canaux de diffusion.

17. Composite actif selon l'une des revendications 1 à 16, caractérisé en ce que les feuilles possèdent des fentes et/ou des entailles et/ou des rainures, traversantes ou non et de différentes longueurs et différentes formes, telles que des arcs de cercle.

18. Procédé de mise en oeuvre de processus physico-chimiques mettant en oeuvre un gaz et soit un solide réactif, soit un solide adsorbant, soit un solide agissant comme catalyseur, soit le siège d'une condensation/évaporation d'un gaz caractérisé en ce qu'il utilise comme milieu réactionnel un composite actif selon l'une des revendications 1 à 16.

19. Procédé selon la revendication 18 caractérisé en ce qu'i1 utilise un solide réactif qui est un sel.

20. Procédé selon la revendication 18 caractérisé en ce qu'il utilise un solide adsorbant.

21. Procédé selon la revendication 18 caractérisé en ce qu'il utilise un solide réactif qui est un métal.

22. Procédé selon la revendication 18 caractérisé en ce qu'il utilise un solide agissant comme un catalyseur.
